# EUROPEAN PATENT SPECIFICATION

(11) **EP 1 613 466 B1**
(45) Date of publication and mention of the grant of the patent: **21.09.2011**
(21) Application number: 04727309.9
(22) Date of filing: 14.04.2004
(51) Int. Cl.: B32B 5/08, B32B 7/10, A41D 27/24

(54) **SEAM**
NAHT
COUTURE

(30) Priority: 15.04.2003 GB 0308667
(43) Date of publication of application: 11.01.2006
(73) Proprietor: W.L. GORE & ASSOCIATES (UK) LTD, London WC2A 2JP (GB)
(72) Inventor: BARRETT, Shaun, Edinburgh EH10 6ET (GB)
(74) Representative: Horner, Martin Grenville
(86) International application number: PCT/GB2004/001597
(87) International publication number: WO 2004/091902

(56) References cited:
- EP-A- 0 410 292
- EP-A- 0 791 674
- EP-A- 0 906 824

## Description

The present invention relates to the production of a waterproof seam between adjacent pieces of waterproof breathable (i.e. water-vapour-permeable) material in the construction of high performance waterproof breathable garments, gloves, hats, shoes, etc. The invention allows seams of improved waterproofness to be produced.

Waterproof water-vapour-permeable fabrics and garments made therefrom are well known in the art. Such garments combine waterproofness with breathability, whereby water vapour generated by the wearer is able to pass out through the garment thereby making the garment comfortable to wear.

A number of waterproof breathable materials (referred to herein as the "functional layer") are known in the art. Very often these are laminates. Whilst the laminate itself is waterproof, the production and sealing of seams made between adjacent pieces of material constitutes a particular problem. Conventionally, such seams are made by sewing the material and then covering the seam with seam sealing tape which is secured to the fabric on either side of the seam itself. Typically, the seam seal tape comprises a backing tape having a covering of hot-melt adhesive on one side. After the seam has been produced by conventional sewing techniques, the seam seal tape is heated, for example using a blast of hot air so as to melt the adhesive. The tape is then applied over the seam and both are passed through the nip of a pair of pressure rollers in order to squeeze the molten adhesive into the fabric so as to ensure good bonding of the tape to the underlying fabric.

For aesthetic reasons, the seam sealing tape is generally applied to the interior of the garment, so that it is hidden from view. Very often, for reasons of comfort and appearance, the inner surface of the waterproof breathable fabric is provided with a woven or knitted liner material, which is soft to touch and provides improved comfort in contact with the wearer. To be comfortable, such liner materials are preferably soft and may be somewhat bulky. The seam sealing of such fabrics having an inner lining layer laminated thereto can pose problems.

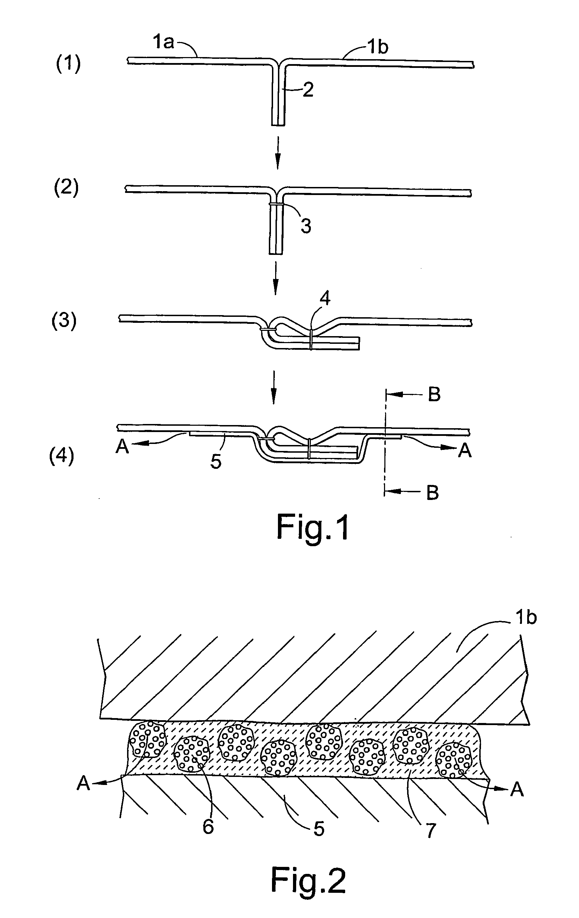

The first problem is that whilst the application of heat and pressure to the seam sealed tape is generally effective to force the molten adhesive through the liner material into good contact with the underlying functional layer (thereby filling the spaces between adjacent yarns in the liner material), the seam seal adhesive may not penetrate within the interstices of the yarns themselves. As is known, yarns are made up of multiple fibres, filaments etc., which have interstices between adjacent fibres or filaments. These interstices provide a path along which liquid water can wick from the outside of the seam to the inside of the garment. This is described in more detail with reference to Figures 1 and 2 herein. Thus, liquid water entering into the seam through a gap between the adjacent pieces of material or through holes in the rows of stitching, is able to wick laterally out of the seam through the interstices in the yarns of the liner material itself. The interstices must be filled if the seam is to be completely waterproof, particularly under severe weather conditions.

A second problem with the conventional seam sealing process is that the choice of liner fabrics which may be seam sealed is very limited. The reason for this is that if bulky liner materials are used on the inner surface of the waterproof breathable laminate (functional layer), these are difficult to seam seal successfully since the combination of heat and pressure is insufficient to cause the adhesive to fill the spaces between the liner yarns and to form a strong bond with the underlying functional layer. If too much pressure is applied between the seam seal rollers, also the pattern of the liner material itself may appear undesirably on the front face of the fabric.

It is an object of the present invention to mitigate these problems and to provide a seam of good waterproofness. A further object is to facilitate seam sealing of bulkier liner materials.

The present invention involves the use of laminates which contain bi-component materials. Such bi-component materials comprise a first thermoplastic component which melts at a higher temperature and a second thermoplastic component which melts at a lower temperature. Bi-component materials are described in patent publications WO99/16616 and EP-A-0906824 (W.L. Gore & Associates Inc.).

Thus, the present invention provides a waterproof seam comprising and formed between two pieces of a fabric, at least one of the pieces being a laminate;
- the laminate comprising a first layer comprising a waterproof water-vapour-permeable layer, and a second knitted or woven layer laminated to the first layer and comprising a first component and a second component, the first component being stable to a first temperature and the second component melting at a second temperature lower than the first temperature; and
- the seam comprising a thermoplastic seam seal tape in contact with the second layer of the at least one piece of laminate, and sealing the seam; the seam seal tape having been applied at a temperature above the melting temperature of the second component, such as to melt the second component, and below the melting temperature of the first component.

The invention also relates to garments, bivouac bags, shelters (including tents) etc., having such seams and also to methods of seam sealing. The seams formed from the laminates of the present invention are sufficiently waterproof that they are able to withstand a water entry pressure of at least 0.07 bar, preferably at least 0.13 bar and most preferably at least 0.2 bar according to the Suter test described herein. Furthermore, the seams are strong and flexible.

In the second layer of the laminate, the second (low melting point) component is preferably meltable at a temperature in the range 80°C to 170°C whilst the first (high melting point) component is stable to a temperature of at least 140°C. For a reliable seam to be formed, the difference between the first temperature and the second temperature is preferably at least 20°C.

According to one embodiment of the invention, the second layer (generally a liner layer) is composed of a plurality of yarns formed of strands, filaments, threads or fibres having interstices between. The invention is particularly useful for seam-sealing bulky or thick often relatively incompressible liner materials; which are otherwise difficult to seam-seal successfully. Such materials include those referred to as "high loft" materials or "raised pile" fabrics. Typically, the second layer is a knit, brushed knit or fleece. Materials which are difficult to seam-seal generally have a tortuous path for adhesive flow, and are of high loft. Generally, they have a thickness (measurable by laser) in excess of 1mm, often in excess of 2mmm, but usually less than 5mm. Typical weights are in the range 20 to 100g/m² especially 30 to 80g/m². Bulk densities are generally in the range 1x10⁴ g/m³ to 1x10⁵ g/m³.

The first component is generally selected from the group of polymers comprising cellulose, protein fibres including wool and silk, high melting point polyolefins, polyester, co-polyester, polyamide or co-polyamide. Preferably, the first component is a polyamide such as nylon 6,6.

The second component in the second layer is a thermoplastic material which is selected from the group of thermoplastics comprising co-polyester, polyamide, co-polyamide and polyolefins such as polypropylene. In a preferred embodiment, the second component is a polyolefin, such as polypropylene.

A particularly preferred embodiment of the invention employs nylon 6,6 as the first component (melting point about 260ºC) and polypropylene (melting point about 160ºC) as the second component.

The yarn in the second layer is in one embodiment a composite fibre comprising the first component and the second component. A composite fibre having two components is sometimes termed a "bi-component" fibre. Suitable bi-component fibres for use in the invention include an eccentric-sheath-core configuration, a concentric-sheath-core configuration, wherein the second component forms the cover, an "island-in-sea" configuration, a wedge-core configuration, a wedge configuration or a "side-by-side" configuration. However, in the preferred embodiment of the invention, a mixture of co-mingled discrete fibres is used, one fibre being formed of the first component and the other fibre being formed of the second component.

If required, more than two components each having a different melting point may be used.

Thus, the present invention allows the temperature and pressure used for the seam sealing process to be kept to a relative low level, which in turn avoids distortion of the seam and the laminates on either side thereof. Too much pressure and/or high temperature, tends to press the liner pattern through onto the surface of the face fabric, which is undesirable. The thermoplastic seam seal tape may be a thermoplastic film which softens and flows when heated. More usually the seam seal tape comprises a backing having a layer of hot melt adhesive thereon. The seam-seal film or adhesive melts at a temperature above the melting temperature of the second component, and below the melting temperature of the first component. This enables the usual seam sealing conditions to be maintained. Preferably, the seam-seal film or adhesive melts at a temperature 10 to 20ºC lower than that of the first component. However, these conditions depend to an extent on rates of heat flow and speed of seam-sealing. The seam-seal adhesive could be a "multi-domain" adhesive, which melts but then maintains its viscosity at higher temperatures and does not become too fluid.

The first layer (functional layer) of the laminate may be a membrane or a film. It may be selected from the group of materials consisting of polyesters, polyamides, polyketones, polysulphones, polycarbonates, fluoropolymers, polyacrylates, co-polyether esters, co-polyether amides, polyurethanes, polyvinylchloride, polytetrafluoroethylene or polyolefins. Preferably, the first layer is formed from expanded polytetrafluoroethylene (ePTFE). Expanded polytetrafluoroethylene is known to be very waterproof and highly breathable. The ePTFE may be provided with a coating of a hydrophilic polymer in known manner. Such laminates may provide a water-vapour transmission rate of greater than 1500g/m²/day (particularly greater than 3000g/m²/day) and a water entry pressure of greater than 0.13 bar.

Alternatively, the waterproof water-vapour-permeable layer may be constituted by a monolithic sheet of water-vapour-permeable polymer; or by a coating of the polymer on a flexible substrate (e.g. a woven or knitted substrate).

The seam may be formed of two pieces of laminate; or one piece of fabric (e.g. the margin of a zip fastener) and one piece of laminate. In this case the fabric will be capable of being sealed in the normal way. The thermoplastic seam seal tape may either overlie the seam or may be interposed between overlapping pieces of fabric so as to bond them and form a seam. In all cases the second layer of the laminate is in contact with the thermoplastic seam seal tape.

Normally, the seams are intended to be resistant to passage of liquid water. However, by suitable choice of materials and adhesives they may be resistant to passage of vapours of chemicals such as NH₃, HCl, H₂S, SO₂ and organic substances.

Embodiments of the present invention will now be described in contrast to the prior art and in conjunction with the attached drawings wherein:
Figure 1 shows schematically the steps in the formation of one type of conventional seam, which is sealed with seam sealing tape;
Figure 2 is an enlarged cross-sectional view along the line B-B of Figure 1.
Figure 3 is a cross-sectional view of a bi-component laminate used to form a seam according to the present invention;
Figure 4 shows a seam according to the present invention;
Figures 5 and 6 show alternative types of seam to which the present invention may be applied;
Figure 7 is a schematic of a seam formed of a zip margin and a piece of laminate, and having an overlying seam seal tape;
Figure 8 is a schematic of a seam formed of a zip margin and a piece of laminate, and having a thermoplastic seam seal tape interposed between the two pieces of fabric; and
Figures 9(a) and 9(b) are scanning electromicrographs (SEM's) of non-sealed yarn fibres and yarn fibres after seam-sealing respectively.
Figures 1 and 2 illustrate the problems with conventional seam sealing procedures.
Figure 1 shows the formation of a conventional seam and the application of conventional seam sealing tape. It is to be understood that the formation of the seam can generally be carried out using conventional sewing machines.

In step 1), two adjacent pieces of material 1a, 1b are overlapped along a seam 2. In a second step 2) the seam is stitched with a row of stitching 3. In a third step 3), the seam is folded over and a further line of stitching 4 is applied so as to form a flattened seam. This seam is not waterproof, since water can ingress through the space between the overlapped pieces of material 1a, 1b. Water can also ingress through the holes formed by the stitching 3, 4. For this reason, it is conventional to apply a hot-melt seam sealing tape across the seam such that it seals to the material on either transverse side of the seam. This is shown in step 4) wherein a seam seal tape 5 has been applied across the seam. Seam seal tape is conventionally applied by applying a heated air stream to melt the hot melt adhesive applied to one side of the seam seal tape and pressing the seam seal tape against the seam using pressure rollers, whereby the hot melt adhesive is pressed into the yarns of the fabric such that the seam seal tape becomes securely adhered to the underlying fabric.

As mentioned previously, a problem with this conventional procedure is that the seam seal adhesive, whilst filling the spaces between adjacent yarns, may not always penetrate into the interstices between fibres, filaments etc., within the yarn itself. These interstices provide a route for moisture to wick through the seam in the direction of the arrows A. Thus, moisture enter the seams either between the adjacent pieces of material or through the stitching holes as mentioned above. It is then able to wick out in the direction of the arrows A, particularly under severe weather conditions.

The problem is illustrated further in Figure 2 which is a cross-section along B-B across the area where the seam seal tape 5 is adhered to material 1b on one side of the seam area. The material 1b includes a liner material laminated thereto composed of individual yarns 6, each yarn is made up of a number of individual fibres, filaments etc. The hot melt adhesive 7 on one side of the seam sealing tape 5 can be seen to have penetrated into the spaces between the yarns 6 but has not penetrated into the interstices between the individual fibres, filaments etc., of the yarns. The pathways for potential moisture ingress A are shown again.

A further problem with this conventional seam sealing procedure is that it is not capable of reliably seam sealing materials which have bulky liner fabrics laminated thereto. In such fabrics, depending on adhesive viscosity an unacceptably large amount of heat and pressure has to be applied (possibly for a long time) in order to force the adhesive between the yarns of the liner material, which results in the pattern of the liner becoming imprinted on the front face of the material 1a, 1b. Even at such high temperatures, pressures and times, formation of a reliable seam cannot be guaranteed.

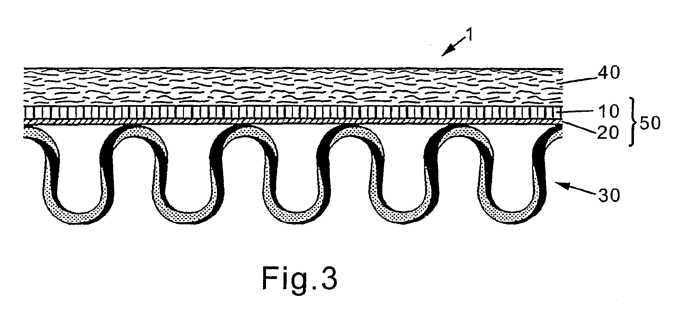

Figure 3 shows a thermoplastic bi-component material of the type described in patent publications WO9/16616 and WO99/16620. The material 1, comprises a face fabric 40 and laminated thereto a waterproof breathable (i.e. water-vapour-permeable) membrane 50, which in turn is composed of a porous polymeric layer 10 and a water-vapour-permeable polymer layer 20 formed of a hydrophilic polymer. On the other side of the composite layer 50 is laminated thereto a knitted or woven bi-component strand layer 30 comprising one or more bi-component yarns which acts as a lining material.

The porous polymeric layer 10 may be a microporous polymer membrane having a microscopic structure of open interconnecting microvoids. It exhibits air permeability and as such imparts, or does not impair water-vapour-permeability. The microporous membrane used is typically of a thickness 5 microns to 125 microns, most preferably of the order 5 microns to 25 microns. The microporous membrane may be formed of plastic or elastomeric polymers. Examples of suitable polymers include polyesters, polyamides, polyolefins, polyketones, polysulphones, polycarbonates, fluoropolymers, polyacrylates, polyurethanes, copolyether esters, copolyether amides and the like.

The preferred microporous polymer membrane material is expanded microporous polytetrafluoroethylene (ePTFE). This material is characterised by a multiplicity of open interconnecting microscopic voids, high void volume, high strength, softness, flexibility, stable chemical properties, high water-vapour transfer and a surface that exhibits good contamination control characteristics. US Patents US-A-3,953,566 and US-A-4,187,390 describe the preparation of such microporous expanded polytetrafluoroethylene membranes. The continuous water-vapour-permeable polymer layer 20 is generally a hydrophilic polymer. The hydrophilic layer selectively transports water by diffusion but does not support pressure-driven liquid or air flow. Therefore, moisture, i.e. water-vapour, is transported but the continuous layer of the polymer precludes the passage of air-borne particles, micro-organisms, oils or other contaminants. This characteristic imparts the textile material and articles made from it (such as garments, socks, gloves, shoes etc.) with good contamination control characteristics by functioning as a barrier to contaminants. Furthermore, the water-vapour transmitting characteristics of the material provide comfort for the wearer.

The continuous water-vapour-permeable polymer layer 20 is typically of a thickness between 5 microns and 50 microns, preferably between about 10 microns and 25 microns. This thickness has been found to be a good practical balance to yield satisfactory durability, continuity and rate of water-vapour transmission.

Although not limited thereto, the continuous water-vapour-permeable polymers of the layer 20 are preferably those of the polyurethane family, the silicone family, the co-polyether ester family or the co-polyether ester amide family. Suitable co-polyether ester hydrophilic compositions may be found in US-A-4,493,870 (Vrouenraets) and US-A-4,725,481 (Ostapachenko). Suitable hydrophilic compositions are described in US-A-4,2340838 (Foy et al). Suitable polyurethanes may be found in US-A-4,194,041 (Gore). A preferred class of continuous water-vapour-permeable polymers of polyurethanes, especially those containing oxyethylene units are described in US-A-4,532,316 (Henn). Typically these materials comprise a composition having a high concentration of oxyethylene units to impart hydrophilicity to the polymer. The concentration of oxyethylene units is typically greater than 45% by weight of the base polymer, preferably greater than 60%, much preferably greater than 70%.

The composite layer 50 can be prepared according to the teachings of US-A-5,026,591 (Henn et al).

The face fabric 40 may be laminated to one side of the composite layer 50 by standard lamination processes. In particular, a dot pattern of liquid heat-curing adhesive may be applied onto one side of the composite layer 50 by a gravure roll. Lamination then occurs by passing the materials between the pressure rollers and curing.

The bi-component layer 30 is usually a woven or knitted textile layer made from yarns, composed of strands, filaments, threads, fibres having at least two components or fibre blends. The first component is a material which is stable (i.e. does not melt or otherwise disintegrate) up to a high temperature e.g. around 230ºC. The second component is a material with a lower melting temperature e.g. around 110ºC. The two components in the knitted or woven bi-component layer 30 may be made up of two different co-mingled types of strands, filaments, threads or fibres. Alternatively, a bi-component yarn is used. The bi-component yarn may have either a core-sheath structure, an "islands-in-the-sea" structure or a "side-by-side" structure. Table 1 of WO99/16616 shows possible commercial bi-component yarns which may be used in the present invention.

In a preferred embodiment of the invention, the two components of the knitted or woven textile layer 30 are either polypropylene and polyamide; polypropylene and polyethylene; or different grades of polyamide (e.g. nylon 6 and nylon 6,6). A particularly preferred embodiment comprises a yarn which is a 60:40 blend of 25x78 dtex polypropylene filaments and 13x44 dtex polyamide filaments (i.e. 78f25/44f13).

The layer 30 may have two thermoplastic components. However, three or more thermoplastic components may be included if desired for particular purposes.

A bi-component or multi-component yarn for use in forming the layer 30 may be made by a variety of prior art techniques. For example, a number of filaments of the different components of the textile layer 30 can be mixed together to form a yarn of a given metric number (Nm) or dtex. The metric number (Nm) of a yarn is given by the following formula Nm = 10,000/dtex. Typically the metric number is from 70 to 90. Thus, a 25 filament yarn of 84 decitex filaments is designated herein as (84f25). The multi-component yarns can be knitted or woven together using known techniques.

The bi-component layer 30 is laminated onto one side of the composite layer 50 by a lamination process similar to that described above in respect of the face fabric 40. Care must be taken during the lamination process that the low melting (or high melting) component does not melt significantly during the lamination process.

A propellant may be included in the bi-component layer 30, as described in WO99/16616.

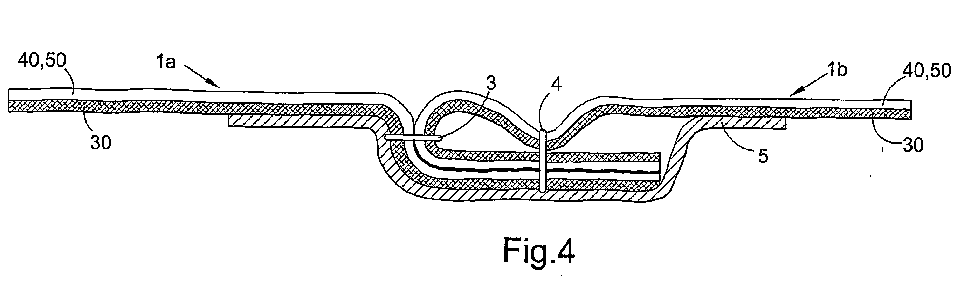

Figure 4 shows a seam formed of overlapping pieces of laminate 1a, 1b of the type shown in Figure 3 and described above. The seam according to the present invention is formed in the manner described in conjunction with Figure 1 above. However, the use of the bi-component laminate material as shown in Figure 3 results in sealing of the interstices between the fibres, filaments etc., in the yarns of the liner material.

Thus, the seam is formed between adjacent pieces of laminate 1a, 1b. Each laminate contains face fabric layer 40, waterproof breathable composite layer 50 (formed of porous polymeric layer 10 and hydrophilic water-vapour-permeable polymer layer 20), and liner layer 30 which is a woven or knitted liner material. The liner material may be bulky since the use of the bi-component yarns provides good seam sealing.

The seam between the adjacent pieces of laminate 1a, 1b and secured by rows of stitching 3, 4 is formed as described in connection with Figure 1. Thereafter, conventional seam sealing tape 5, bearing a layer of hot-melt adhesive on its side facing the liner layer 30 is applied in conventional manner. The temperature of the seam seal process must be chosen to be greater than the melting temperature of the second lower melting component of the knitted or woven layer 30, such that the lower melting component of the bi-component yarns becomes sufficiently softened or melted during the seam sealing process. However, the temperature must be kept below the melting temperature of the first higher melting component of the bi-component yarns, such that this first component remains stable and essentially structurally unchanged. In a preferred embodiment of the invention, the seam seal process is at a temperature of around 190ºC. At this temperature, the low melting components in the liner layer 30 melt and due to the pressure exerted by the seam seal rollers, the second component melts and fills the interstices between the stable high melting first component. At the same time, the hot melt adhesive of the seam seal tape flows around the yarns of the liner 30 and penetrates through the liner material to form good adhesive contact with the underlying waterproof breathable membrane 50. In this way, a complete seal is formed between the seam sealing tape 5 and the waterproof breathable membrane 50 that seals both around the yarns and within the interstices within the yarns of the liner, so that lateral transmission of moisture is substantially mitigated. Surprisingly, the invention also allows the use of bulky liner materials and substantially extends the range of liner constructions which may be effectively seam sealed.

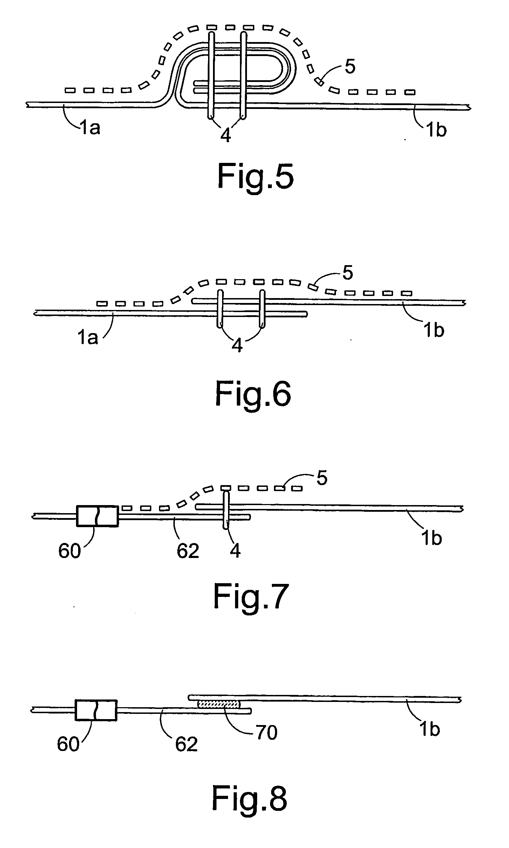

Figures 5 and 6 show alternative seam constructions which may also be sealed according to the present invention. Figure 5 shows a "shirt" folded seam. Figure 6 shows a simple overlapped seam. Both seams are secured using rows of stitching 4 and corresponding reference numerals are used as above. Also, the seam shown in Figure 1 need not be "top-stitched" i.e. the second row 4 of stitching may be omitted.

Figure 7 and 8 show seams formed between a piece of fabric (i.e. the margin 62 of a zip fastener 60) and a piece of laminate 1D. The pieces overlap to form a stitched seam. Seam seal tape 5 is applied over the seam in Figure 7. In Figure 8 the pieces are joined by an interposed thermoplastic seam seal tape film 70 which joins the pieces and also seals the seam.

### EXAMPLE 1 (Polypropylene/Polyamide 6,6 blend)

A seam was formed between two pieces of three layer (3L) laminate. The laminate comprises of a woven textile face laminated to a functional layer formed from expanded polytetrafluoroethylene coated with a hydrophilic polymer, and a knitted layer laminated to the opposite side of functional layer. The knitted layer was comprised of a first component (polyamide 6,6 melting point 260ºC) and a second component (polypropylene melting point 160º). The multifilament yarn (38 individual filaments) comprised 25 filaments of 84 decitex polypropylene (84f25) and 13 filaments of 44 decitex polyamide 6,6 (44f13).

The seam was first sewn on a standard sewing machine and then seam sealed on a GORE-SEAM® tape convective heat sealing machine using the following conditions: nozzle air temperature 600ºC, air flow rate 130 standard cubic foot per hour, nip pressure 6 bar, seam sealing speed 2m per minute. The seam was tested using the Suter method described within this text and passed initial waterproofness test of 3psi for 2 minutes. The seam seal tape used was GORE-SEAM® tape.

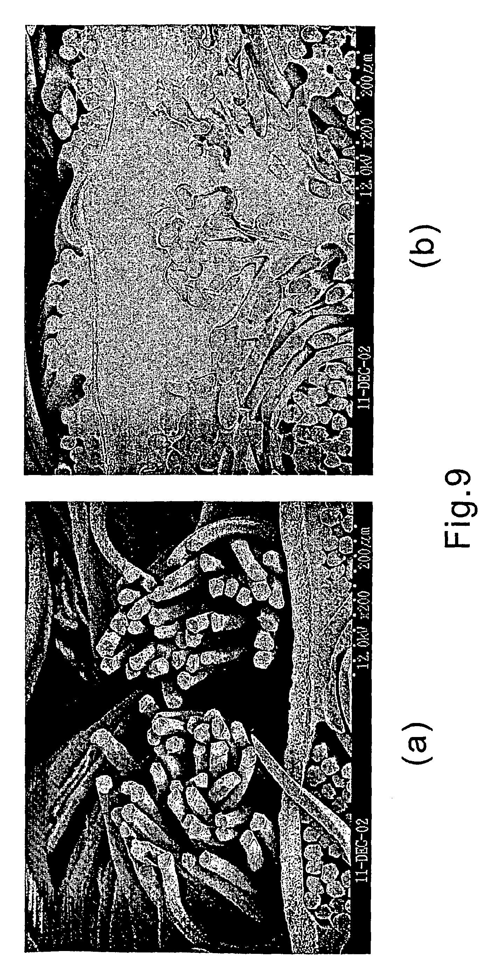

Figures 9(a) and 9(b) show an electron micrograph of a cross section of non-sealed laminate and laminate after being subjected to the seam sealing process. 38 filaments can be clearly seen in the 'control sample, however, only 16 remain as wholly integral and identifiable filaments after seeing the sealing process. The missing filaments have undergone varying degree of melting which serves to aid blocking of the interstitial gaps in the multifilament bundle.

### WATERPROOFNESS (SUTER TEST)

Samples of the present invention were tested for waterproofness using a modified Suter test apparatus, which is a low water entry pressure challenge. Water was forced against the underside of a sample of 11.25cm diameter sealed by two circular rubber gaskets in a clamped arrangement. The sample was mounted with the woven face fabric downwards against the water, the knit layer with the taped seam being uppermost. It is important that a leakproof seal is formed by the clamp mechanism, gaskets and sample. In deformable samples, the sample was overlaid by a reinforcing scrim (e.g. an open non-woven fabric) clamped over the sample. The upper side of the sample with the taped seam was open to the atmosphere and visible to the operator. The water pressure on the underside of the sample was increased to 2 pounds per square inch (0.14 kg/cm²) by a pump connected to a water reservoir, as indicated by a pressure gauge and regulated by an in-line valve. The upper side of the sample was visually observed for a period of one minute for the appearance of any water which might be forced through the sample in the event of lack of waterproofness. Liquid water seen on the surface was interpreted as a deficiency in the waterproofness of the test sample. The sample passed the test if no liquid water was visible on the upper side of the sample within the
One minute test period.

## Claims

1. A waterproof seam comprising and formed between two pieces of a fabric, at least one of the pieces being a laminate;
- the laminate comprising a first layer comprising a waterproof water-vapour-permeable layer, and a second knitted or woven layer laminated to the first layer and comprising a first component and a second component, the first component being stable to a first temperature and the second component melting at a second temperature lower than the first temperature; and
- the seam comprising a thermoplastic seam seal tape in contact with the second layer of the at least one piece of laminate, and sealing the seam; the seam seal tape having been applied at a temperature above the melting temperature of the second component, such as to melt the second component, and below the melting temperature of the first component.

2. A seam according to claim 1, wherein the second knitted or woven layer is a bulky material.

3. A seam according to any preceding claim wherein the second component is meltable at a temperature in the range 80°C to 170°C.

4. A seam according to any preceding claim wherein the first component is stable to a temperature of at least 140°C.

5. A seam according to any preceding claim wherein the difference between the melting temperature of the first and second components is at least 20ºC.

6. A seam according to any preceding claim wherein the second layer is composed of a plurality of yarns, each yarn being formed of strands, filaments, threads or fibres having interstices between.

7. A seam according to any preceding claim wherein the first component is nylon 6,6 and the second component is polypropylene.

8. A seam according to any preceding claim wherein the second layer is composed of composite fibres, each fibre comprising the first component and the second component.

9. A seam according to any of claims 1-7 wherein the second layer is composed of first component fibres and second component fibres co-mingled together.

10. A seam according to any preceding claim wherein the thermoplastic seam seal tape comprises a backing having a layer of hot melt adhesive thereon.

11. A seam according to any preceding claim wherein the seam seal tape has a melting point above the melting point of the second component and below the melting point of the first component.

12. A seam according to claim 10 wherein the melting point of the seam seal tape is 10 to 20ºC lower than that of the first component.

13. A seam according to any preceding claim wherein the second layer comprises more than two components each having a different melting point.

14. A seam according to any preceding claim wherein the waterproof water-vapour-permeable layer comprises a monolithic sheet of water-vapour-permeable polymer.

15. A seam according to any of claims 1 to 13 wherein the waterproof water-vapour-permeable layer comprises a coating of water-vapour-permeable polymer on a flexible substrate.

16. A seam according to any of claims 1 to 13 wherein the water-vapour-permeable layer comprises expanded polytetrafluoroethylene.

17. A seam according to any of claims 1 to 13 wherein the water-vapour-permeable layer comprises expanded polytetrafluoroethylene coated with a water-vapour-permeable polymer.

18. A seam according to any preceding claim which is resistant to the passage of vapours of NH₃, HCl, H₂S, SO₂ or organic substances.

19. A seam according to any preceding claim formed of one piece of fabric and one piece of laminate.

20. A seam according to claim 19 wherein the fabric is the margin of a zip fastener.

21. A seam according to any of claims 1-18 formed of two pieces of laminate.

22. A seam according to any preceding claim, the tape overlying the seam and having been fused to the two fabric pieces on either side of the seam in contact with the second layer(s) thereof.

23. A seam according to any of claims 1-21, the tape being interposed between the two pieces of fabric in contact with the second layer(s) thereof and fused thereto.

24. A garment having a seam according to any preceding claim.

25. A shelter, cover, bivouac bag or tent having a seam according to any preceding claim.

## Patentansprüche

1. Wasserdichte Naht, die zwei Stoffstücke aufweist und dazwischen gebildet wird, wobei mindestens eines der Stücke ein Laminat ist;
- wobei das Laminat eine erste Schicht, die eine wasserdichte, wasserdampfdurchlässige Schicht aufweist, und eine zweite gewirkte oder gewebte Schicht aufweist, die auf die erste Schicht laminiert ist und eine erste Komponente und eine zweite Komponente aufweist, wobei die erste Komponente gegen eine erste Temperatur beständig ist, und wobei die zweite Komponente bei einer zweiten Temperatur schmilzt, die niedriger ist als die erste Temperatur; und
- wobei die Naht ein thermoplastisches Nahtdichtungsband in Kontakt mit der zweiten Schicht des mindestens einen Laminatstückes und die Naht abdichtend aufweist; wobei das Nahtdichtungsband bei einer Temperatur oberhalb der Schmelztemperatur der zweiten Komponente, wie beispielsweise, um die zweite Komponente zu schmelzen, und unterhalb der Schmelztemperatur der ersten Komponente aufgebracht wurde.

2. Naht nach Anspruch 1, bei der die zweite gewirkte oder gewebte Schicht ein bauschiges Material ist.

3. Naht nach einem der vorhergehenden Ansprüche, bei der die zweite Komponente bei einer Temperatur im Bereich von 80 °C bis 170 °C schmelzbar ist.

4. Naht nach einem der vorhergehenden Ansprüche, bei der die erste Komponente gegen eine Temperatur von mindestens 140 °C beständig ist.

5. Naht nach einem der vorhergehenden Ansprüche, bei der die Differenz zwischen der Schmelztemperatur der ersten und der zweiten Komponente mindestens 20 °C beträgt.

6. Naht nach einem der vorhergehenden Ansprüche, bei der die zweite Schicht aus einer Vielzahl von Garnen besteht, wobei jedes Garn aus Elementarfadenbündeln, Filamenten, Fäden oder Fasern mit Zwischenräumen dazwischen gebildet wird.

7. Naht nach einem der vorhergehenden Ansprüche, bei der die erste Komponente Nylon 6.6 und die zweite Komponente Polypropylen ist.

8. Naht nach einem der vorhergehenden Ansprüche, bei der die zweite Schicht aus Verbundfasern besteht, wobei jede Faser die erste Komponente und die zweite Komponente aufweist.

9. Naht nach einem der Ansprüche 1 bis 7, bei der die zweite Schicht aus miteinander vermischten Fasern der ersten Komponente und Fasern der zweiten Komponente besteht.

10. Naht nach einem der vorhergehenden Ansprüche, bei der das thermoplastische Nahtdichtungsband ein Trägermaterial mit einer Schicht aus Schmelzklebstoff darauf aufweist.

11. Naht nach einem der vorhergehenden Ansprüche, bei der das Nahtdichtungsband einen Schmelzpunkt oberhalb des Schmelzpunktes der zweiten Komponente und unterhalb des Schmelzpunktes der ersten Komponente aufweist.

12. Naht nach Anspruch 10, bei der der Schmelzpunkt des Nahtdichtungsbandes 10 bis 20 °C niedriger ist als der der ersten Komponente.

13. Naht nach einem der vorhergehenden Ansprüche, bei der die zweite Schicht mehr als zwei Komponenten aufweist, die jeweils einen unterschiedlichen Schmelzpunkt aufweisen.

14. Naht nach einem der vorhergehenden Ansprüche, bei der die wasserdichte, wasserdampfdurchlässige Schicht eine monolithische Schicht aus dem wasserdampfdurchlässigen Polymer aufweist.

15. Naht nach einem der Ansprüche 1 bis 13, bei der die wasserdichte, wasserdampfdurchlässige Schicht eine Beschichtung aus dem wasserdampfdurchlässigen Polymer auf einem elastischen Trägermaterial aufweist.

16. Naht nach einem der Ansprüche 1 bis 13, bei der die wasserdampfdurchlässige Schicht expandiertes Polytetrafluorethylen aufweist.

17. Naht nach einem der Ansprüche 1 bis 13, bei der die wasserdampfdurchlässige Schicht expandiertes Polytetrafluorethylen aufweist, das mit einem wasserdampfdurchlässigen Polymer beschichtet ist.

18. Naht nach einem der vorhergehenden Ansprüche, die gegen den Durchgang von NH₃-, HCl-, H₂S-, SO₂-Dämpfen oder organischen Substanzen beständig ist.

19. Naht nach einem der vorhergehenden Ansprüche, die aus einem Stück Stoff und einem Stück Laminat gebildet wird.

20. Naht nach Anspruch 19, bei der der Stoff der Rand eines Reißverschlusses ist.

21. Naht nach einem der Ansprüche 1 bis 18, die aus zwei Stücken des Laminates gebildet wird.

22. Naht nach einem der vorhergehenden Ansprüche, bei der das Band über der Naht liegt und mit den zwei Stoffstücken auf beiden Seiten der Naht in Kontakt mit der (den) zweiten Schicht(en) davon verschweißt wurde.

23. Naht nach einem der Ansprüche 1 bis 21, wobei das Band zwischen den zwei Stoffstücken in Kontakt mit der (den) zweiten Schicht(en) davon angeordnet und damit verschweißt wurde.

24. Kleidungsstück mit einer Naht nach einem der vorhergehenden Ansprüche.

25. Schutzdach, Abdeckung, Biwaksack oder Zelt mit einer Naht nach einem der vorhergehenden Ansprüche.

## Revendications

1. Couture étanche à l'eau, comprenant deux pièces d'un tissu et formée entre celles-ci, au moins une des pièces étant constituée par un stratifié ;
le stratifié comprenant une première couche comprenant une couche étanche à l'eau perméable à la vapeur d'eau, et une deuxième couche tricotée ou tissée appliquée par stratification sur la première couche et comprenant un premier composant et un deuxième composant, le premier composant étant stable en présence d'une première température et le deuxième composant étant porté à fusion en présence d'une deuxième température inférieure à la première température ; et
la couture comprenant un ruban d'étanchéité de couture thermoplastique, en contact avec la deuxième couche de la au moins une pièce de stratifié, et établissant l'étanchéité de la couture ; le ruban d'étanchéité de la couture étant appliqué en présence d'une température supérieure à la température de fusion du deuxième composant, de sorte à entraîner la fusion du deuxième composant, et inférieure à la température de fusion du premier composant.

2. Couture selon la revendication 1, dans laquelle la deuxième couche tricotée ou tissée est composée d'un matériau gonflant.

3. Couture selon l'une quelconque des revendications précédentes, dans lequel le deuxième composant peut être porté à fusion en présence d'une température comprise dans l'intervalle allant de 80°C à 170°C.

4. Couture selon l'une quelconque des revendications précédentes, dans laquelle le premier composant est stable en présence d'une température d'au moins 140°C.

5. Couture selon l'une quelconque des revendications précédentes, dans laquelle la différence entre la température de fusion des premier et deuxième composants correspond au moins à 20°C.

6. Couture selon l'une quelconque des revendications précédentes, dans laquelle la deuxième couche est composée de plusieurs fils, chaque fil étant composé de brins, de filaments, de filés, ou de fibres, des interstices étant formés entre eux.

7. Couture selon l'une quelconque des revendications précédentes, dans laquelle le premier composant est du nylon 6,6, le deuxième composant étant du polypropylène.

8. Couture selon l'une quelconque des revendications précédentes, dans laquelle la deuxième couche est composée de fibres composites, chaque fibre comprenant le premier composant et le deuxième composant.

9. Couture selon l'une quelconque des revendications 1 à 7, dans laquelle la deuxième couche est composée des fibres du premier composant et des fibres du deuxième composant mélangées.

10. Couture selon l'une quelconque des revendications précédentes, dans laquelle le ruban d'étanchéité thermoplastique de la couture comprend un support d'adhésif thermofusible.

11. Couture selon l'une quelconque des revendications précédentes, dans laquelle le ruban d'étanchéité de la couture présente un point de fusion supérieur au point de fusion du deuxième composant et inférieur au point de fusion du premier composant

12. Couture selon la revendication 10, dans laquelle le point de fusion du ruban d'étanchéité de la couture est inférieur de 10 à 20°C à celui du premier composant.

13. Couture selon l'une quelconque des revendications précédentes, dans laquelle la deuxième couche comprend plus de deux composants, présentant chacun un point de fusion différent.

14. Couture selon l'une quelconque des revendications précédentes, dans laquelle la couche étanche à l'eau perméable à la vapeur d'eau comprend une feuille monolithique de polymère perméable à la vapeur d'eau.

15. Couture selon l'une quelconque des revendications 1 à 13, dans laquelle la couche étanche à l'eau perméable à la vapeur d'eau comprend un revêtement de polymère perméable à la vapeur d'eau sur un substrat flexible.

16. Couture selon l'une quelconque des revendications 1 à 13, dans laquelle la couche perméable à la vapeur d'eau comprend du polytétrafluoréthylène expansé.

17. Couture selon l'une quelconque des revendications 1 à 13, dans laquelle la couche perméable à la vapeur d'eau comprend du polytétrafluoréthylène expansé revêtu d'un polymère perméable à la vapeur d'eau.

18. Couture selon l'une quelconque des revendications précédentes, résistante au passage de vapeurs de NH₃, de HCl, de H₂S, de SO₂ ou de substances organiques.

19. Couture selon l'une quelconque des revendications précédentes, formée sur une pièce de tissu et une pièce de stratifié.

20. Couture selon la revendication 19, dans laquelle le tissu constitue le bord d'une fermeture à glissière.

21. Couture selon l'une quelconque des revendications 1 à 18, formée de deux pièces de stratifié.

22. Couture selon l'une quelconque des revendications précédentes, le ruban étant superposé à la couture et ayant été appliqué par fusion sur les deux pièces de tissu sur chaque côté de la couture en contact avec les (la) deuxième(s) couche(s) de celle-ci.

23. Couture selon l'une quelconque des revendications 1 à 21, le ruban étant agencé entre les deux pièces de tissu, en contact avec la (les) deuxième(s) couche(s) de celle-ci et y étant appliqué par fusion.

24. Vêtement comportant une couture selon l'une quelconque des revendications précédentes.

25. Abri, couverture, sac de bivouac ou tente comportant une couture selon l'une quelconque des revendications précédentes.
